# EUROPÄISCHE PATENTSCHRIFT

(11) **EP 1 793 444 B1**
(45) Veröffentlichungstag und Bekanntmachung des Hinweises auf die Patenterteilung: **06.03.2013**
(21) Anmeldenummer: 06123353.2
(22) Anmeldetag: 02.11.2006
(51) Int. Cl.: H01M 8/12, H01M 8/02

(54) **Hochtemperatur-Brennstoffzelle und Verfahren zur Herstellung einer Hochtemperatur-Brennstoffzelle**
High temperature fuel cell and method of fabricating the same
Pile à combustible haute température et méthode de fabrication d'une telle pile à combustible

(30) Priorität: 30.11.2005 DE 102005058128
(43) Veröffentlichungstag der Anmeldung: 06.06.2007
(73) Patentinhaber: Deutsches Zentrum für Luft- und Raumfahrt e.V., 51147 Köln (DE)
(72) Erfinder: Franco, Thomas, 73460, Hüttlingen (DE); Dr. Lang, Michael, 73079, Süssen (DE)
(74) Vertreter: Hoeger, Stellrecht & Partner Patentanwälte

(56) Entgegenhaltungen:
- EP-A- 1 318 560
- EP-A- 1 458 043
- WO-A-2005/122300
- WO-A-2006/010260
- CA-A1- 2 440 288

## Beschreibung

Die Erfindung betrifft eine Hochtemperatur-Brennstoffzelle, umfassend eine Anode und einen Träger, an welchem die Anode angeordnet ist und welcher für Brennstoff durchlässig ist, wobei der Träger aus einem metallischen Material hergestellt ist, und eine zwischen der Anode und dem Träger angeordnete Diffusionsbarriere zur Vermeidung von Interdiffusionsprozessen zwischen dem Träger und der Anode, wobei die Diffusionsbarriere für Brennstoff durchlässig ist und die Diffusionsbarriere eine Sperrwirkung für die Diffusion von Metallspezies zwischen Anode und Träger aufweist, und wobei die Diffusionsbarriere durch mindestens eine Materialschicht gebildet ist, welche auf dem Träger angeordnet ist.

Die Erfindung betrifft ferner ein Verfahren zur Herstellung einer Hochtemperatur-Brennstoffzelle, bei dem eine Anode auf einem metallischen Träger angeordnet wird und eine Diffusionsbarriere hergestellt wird, welche zwischen Anode und Träger angeordnet ist, wobei die Diffusionsbarriere auf den Träger und/oder die Anode aufgebracht wird, und wobei die Diffusionsbarriere eine Sperrwirkung für die Diffusion von Metallspezies zwischen Anode und Träger aufweist.

Hochtemperatur-Brennstoffzellen werden auch als SOFC (Solid Oxide Fuel Cell) bezeichnet. Sie arbeiten in einem Temperaturbereich um 900°C und weisen einen hohen Wirkungsgrad auf.

Bei dem sogenannten planaren Konzept werden elektrochemische Funktionsschichten auf einen Träger mit einer planaren Oberfläche aufgebracht (beispielsweise "Investigation of porous metallic substrates for plasma sprayed thin-film SOFC" von T. Franco et al., 15th International Plansee Seminar, Reutte, 28. Mai bis 1. Juni 2001). Dieses Konzept ist besonders geeignet, um mechanisch stabile Brennstoffzellenstapel durch die Hintereinanderschaltung von einzelnen Brennstoffzellen zu bilden.

Aus der WO 01/59862 A2 ist eine Brennstoffzellenkomponente bekannt, welche ein poröses Metallflussfeld umfasst, eine Zwischenschicht umfasst, welche direkt mit dem porösen Metallflussfeld verbunden ist, und eine Elektrode umfasst, welche direkt mit der Zwischenschicht verbunden ist.

Aus der nicht vorveröffentlichten WO 2005/122300 A2 ist eine SOFC-Zelle bekannt, welche ein metallisches Trägermaterial, eine aktive Anodenschicht, eine Elektrolytschicht, eine aktive Kathodenschicht und eine Zwischenschicht umfasst. Es sind Mittel zur Vermeidung der Diffusion zwischen dem metallischen Träger und der aktiven Anode vorgesehen.

Aus der CA 2 440 288 A1 ist eine anodengetragene SOFC bekannt, welche eine Anodenstützlage, eine poröse Kermet-Pufferschicht in Kontakt mit der Anodenstützlage und eine Anodenschicht in Kontakt mit der Pufferschicht aufweist.

Aus der EP 1 458 043 A1 ist ein Verfahren zur Herstellung einer Brennstoffzellenanordnung bekannt, bei dem auf einem Substrat eine Mehrzahl von Komponentenschichten abgeschieden wird. Es kann dabei mindestens eine Diffusionsbarrierenschicht abgeschieden werden.

Der Erfindung liegt die Aufgabe zugrunde, eine Hochtemperatur-Brennstoffzelle der eingangs genannten Art bereitzustellen, welche eine hohe Langzeitbeständigkeit aufweist.

Diese Aufgabe wird bei der eingangs genannten Hochtemperatur-Brennstoffzelle erfindungsgemäß dadurch gelöst, dass die Diffusionsbarriere eine oder mehrere Materialien mit Perovskit-Struktur ABO₃ und/oder Spinell-Struktur AB₂O₄ umfasst und dass der thermische Ausdehnungskoeffizient des Materials der Diffusionsbarriere im Bereich zwischen 9 x 10⁻⁶ K⁻¹ und 12 x 10⁻⁶ K⁻¹ liegt. Durch den Träger, der insbesondere porös ausgebildet ist, kann Brennstoff wie Wasserstoff, Methan oder Erdgas zu der Anode gelangen. Zwischen dem Träger und der Anode können Diffusionsprozesse stattfinden, die zur Rissbildung führen können. Beispielsweise ist der Träger aus einem ferritischen Material hergestellt. Die Anode kann Ni enthalten. Von der Anode kann Ni in die Trägermatrix eindiffundieren. Dort kann es dann zu einer Austenitisierung des ferritischen Gefüges kommen. Dadurch wiederum wird der thermische Ausdehnungskoeffizient erhöht. Die Gefügeumwandlung führt im Zusammenhang mit induzierten thermischen Spannungen im Zellbetrieb zu Rissbildungen im Schichtverbund.

Aus dem Träger können Metallspezies und insbesondere Fe-Spezies und Cr-Spezies durch die Anode hindurch zu einer Anoden-Elektrolyt-Grenzschicht diffundieren und mit dort ankommenden O⁻²-Ionen zu Oxidverbindungen oxidieren. Der in der Anode und an der Anoden-Elektrolyt-Grenzschicht stattfindende Oxidationsvorgang ist in der Regel mit einer starken Volumenvergrößerung verbunden, die zur Rissbildung in der Elektrolyteinrichtung und zur Zerstörung der Zelle führen kann.

Erfindungsgemäß ist eine Diffusionsbarriere zwischen dem Träger und der Anode vorgesehen. Dadurch tritt eine Sperrwirkung für die Diffusion von metallischen Spezies von der Anode in den Träger und von dem Träger in die Anode auf. Dadurch wird eine Gefügeumwandlung bzw. die Oxidbildung weitgehend verhindert. Dadurch wiederum lässt sich die Lebensdauer der Hochtemperatur-Brennstoffzelle erhöhen.

Die Diffusionsbarriere ist durch mindestens eine Materialschicht gebildet. Ein geeignetes Material wird auf dem Träger oder der Anode hergestellt, um die Diffusionsbarriere auszubilden.

Die mindestens eine Materialschicht ist auf dem Träger angeordnet. Eine solche Diffusionsbarriere lässt sich auf einfache Weise herstellen.

Die Diffusionsbarriere weist eine Sperrwirkung für die Diffusion von Metallspezies zwischen Anode und Träger auf. Dadurch lässt sich eine Gefügeumwandlung und die Oxidbildung sperren.

Die Diffusionsbarriere umfasst eine oder mehrere Materialien mit Perovskit-Struktur ABO₃ und/oder Spinell-Struktur AB₂O₄. Die Diffusionsbarriere kann ganz oder teilweise aus solchen Materialien hergestellt sein. Solche Materialien lassen sich auch gezielt dotieren, um die elektrische Leitfähigkeit und den thermischen Ausdehnungskoeffizienten einzustellen.

Es kann vorgesehen sein, dass die mindestens eine Materialschicht auf den Träger und/oder die Anode aufgespritzt ist und insbesondere mittels eines Plasmaspritzverfahrens aufgebracht ist. Dadurch lassen sich dünne Schichten mit einer porösen Struktur herstellen.

Insbesondere weist die Diffusionsbarriere eine poröse Struktur auf, damit gasförmiger Brennstoff durch den Träger und die Diffusionsbarriere hindurch zu der Anode gelangen kann.

Ganz besonders vorteilhaft ist es, wenn das Material der Diffusionsbarriere einen an das Anodenmaterial und/oder das Trägermaterial angepassten thermischen Ausdehnungskoeffizienten hat. Dadurch wird die Rissbildung an der Grenzfläche zwischen Träger und Diffusionsbarriere und zwischen Diffusionsbarriere und Anode weitgehend verhindert.

Der thermische Ausdehnungskoeffizient des Materials der Diffusionsbarriere liegt im Bereich zwischen 9 x 10⁻⁶K⁻¹ und 12 x 10⁻⁶K⁻¹. Günstigerweise liegt der thermische Ausdehnungskoeffizient zwischen 9,5 x 10⁻⁶K⁻¹ und 11,5 x 10⁻⁶K⁻¹. Besonders vorteilhaft ist es, wenn der thermische Ausdehnungskoeffizient zwischen 10 x 10⁻⁶K⁻¹ und 11 x 10⁻⁶K⁻¹ liegt.

Insbesondere ist das Material der Diffusionsbarriere elektrisch leitfähig aufgrund elektronischer Leitung. Dadurch ist für einen elektrischen Kontakt zwischen der Anode und dem metallischen Träger gesorgt. Vorzugsweise ist die Ionenleitfähigkeit des Materials der Diffusionsbarriere gering. Dadurch hat die Diffusionsbarriere eine ionenblockierende Wirkung sowohl für Sauerstoffanionen als auch für Metallkationen.

Vorteilhaft ist es, wenn die Leitfähigkeit in Anodengasatmosphäre (bei einem Sauerstoffpartialdruck von 10⁻¹⁶□bar) zwischen 0,1 S/cm und 10 S/cm und insbesondere zwischen 1 S/cm und 3 S/cm liegt.

Ferner ist es günstig, wenn die Diffusionsbarriere aus einem Material hergestellt ist, welches in feuchter Anodengasatmosphäre chemisch beständig ist. Die Anodengasatmosphäre hat reduzierende Wirkung. Durch eine entsprechende chemische Beständigkeit und insbesondere thermodynamische Stabilität des Materials wird die Lebensdauer der Hochtemperatur-Brennstoffzelle erhöht, da sich das Material der Diffusionsbarriere höchstens langsam zersetzen kann.

Ferner ist günstig, wenn die Diffusionsbarriere aus einem Material hergestellt ist, welches im Zellbetrieb der Brennstoffzelle ein chemisch inertes Verhalten hat, d.h. keine Reaktion mit angrenzenden Materialien am Träger und an der Anode eingeht. Insbesondere dürfen keine Fremdphasen entstehen.

Insbesondere weist die Diffusionsbarriere eine Sperrwirkung für die Diffusion von Fe-Spezies und/oder Cr-Spezies und/oder Mn-Spezies und/oder Ni-Spezies zwischen Anode und Träger auf. Über die Sperrwirkung bezüglich der Diffusion von Fe-Spezies und/oder Cr-Spezies lässt sich insbesondere die Oxidbildung in der Anode und an der Anoden-Elektrolyt-Grenzfläche verhindern. Mit der Sperrwirkung für Ni-Spezies lässt sich die Austenitisierung eines ferritischen Gefüges des Trägers verhindern.

Günstigerweise ist der Träger aus einem metallischen Material hergestellt. Dadurch wird ein mechanisch stabiles Substrat für einen planaren Aufbau einer elektrochemischen Funktionseinheit bereitgestellt. Ferner lässt sich der elektrische Anschluss beispielsweise einer Bipolarplatte auf einfache Weise erreichen.

Insbesondere ist der Träger aus einem Fe umfassenden metallischen Material hergestellt. Beispielsweise ist er aus einer ferritischen Stahllegierung hergestellt.

Eine ferritische Stahllegierung kann Cr und Mn umfassen.

Insbesondere ist die Anode aus einem Ni umfassenden Material hergestellt. Solche Anoden (beispielsweise ZrO₂/Ni-Anoden) weisen einen hohen elektrochemischen Wirkungsgrad auf.

Günstig ist es, wenn der Träger eine poröse Struktur aufweist. Er ist dadurch auf einfache Weise herstellbar, mechanisch entsprechend stabil, um als Substrat für eine elektrochemische Funktionseinheit zu dienen, und der Gastransport zur Anode zur Brennstoffzufuhr und Abfuhr von Reaktionsprodukten ist gewährleistet.

Insbesondere ist eine Kathode vorgesehen und es ist eine Elektrolyteinrichtung vorgesehen, welche zwischen der Kathode und der Anode angeordnet ist. Bei der Elektrolyteinrichtung handelt es sich vorzugsweise um eine Festkörperelektrolyteinrichtung.

Die Elektrolyteinrichtung ist insbesondere gasdicht, um für eine Gastrennung zwischen der Kathode und der Anode zu sorgen.

Ferner ist die Elektrolyteinrichtung für Sauerstoffionen leitend, um der Anode Sauerstoffionen bereitstellen zu können.

Günstigerweise weist die Diffusionsbarriere eine Dicke kleiner als 100 µm auf. Je kleiner die Diffusionsbarriere ist, desto vorteilhafter ist dieses, da dadurch der ohmsche Widerstand über die Zelle kleiner wird.

Es hat sich als günstig erwiesen, wenn die Diffusionsbarriere aus einem oxidkeramischen Material hergestellt ist. Ein oxidkeramisches Material lässt sich porös aufbringen, um die Brennstoffdurchlässigkeit zu gewährleisten. Ferner lässt sich eine Anpassung des thermischen Ausdehnungskoeffizienten erreichen. Auch die weiteren Anforderungen (elektrische Leitfähigkeit, chemische Beständigkeit, elektrochemisch inertes Verhalten) lassen sich erfüllen.

Beispielsweise umfasst die Diffusionsbarriere Cr₂O₃. Die Diffusionsbarriere kann ganz oder teilweise aus diesem Material hergestellt sein.

Insbesondere ist das Material A-seitig und/oder B-seitig dotiert. Durch eine solche Dotierung lässt sich die elektrische Leitfähigkeit und auch der thermische Ausdehnungskoeffizient beeinflussen.

Beispielsweise ist eine A-seitige Dotierung mit Sr und/oder Cr und/oder Ba vorgesehen.

Es kann eine B-seitige Dotierung mit Mg und/oder Al und/oder Mn und/oder Fe und/oder Co und/oder Ni und/oder Cu und/oder Cr und/oder Zn vorgesehen sein, um die elektrische Leitfähigkeit in dem thermischen Ausdehnungskoeffizienten einzustellen.

Günstig ist es, wenn die Diffusionsbarriere einen oder mehrere Lanthan-Perovskite umfasst. Beispielsweise ist das Material La_{0.7}Ca_{0.15}Sr_{0.15}CrO₃ für die Diffusionsbarriere geeignet.

Es ist vorgesehen, dass die Dotierung so gewählt ist, dass sich bei ausreichender elektrischer Leitfähigkeit ein akzeptables Quellverhalten ergibt. Durch Dotierung wird die elektrische Leitfähigkeit und auch der thermische Ausdehnungskoeffizient erhöht. Allerdings geht mit der Dotierung insbesondere bei Lanthan-Perovskiten einher eine Abnahme der chemischen Beständigkeit in reduzierender Atmosphäre. Durch den Ausbau von Sauerstoff aus der Struktur erfolgt eine Volumenvergrößerung, die als Quellung bezeichnet wird. In der Praxis muss ein Kompromiss zwischen elektrischer Leitfähigkeit, thermischen Ausdehnungskoeffizienten und akzeptablem Quellverhalten gefunden werden, wobei dieser Kompromiss über die Dotierung zu finden ist.

Der Erfindung liegt ferner die Aufgabe zugrunde, ein Verfahren der eingangs genannten Art bereitzustellen, mit welchem sich eine Hochtemperatur-Brennstoffzelle mit hoher Langzeitbeständigkeit bereitstellen lässt.

Diese Aufgabe wird bei dem eingangs genannten Verfahren erfindungsgemäß dadurch gelöst, dass die Diffusionsbarriere eine oder mehrere Materialien mit Perovskit-Struktur ABO₃ und/oder Spinell-Struktur AB₂O₄ umfasst und dass der thermische Ausdehnungskoeffizient des Materials der Diffusionsbarriere im Bereich zwischen 9 x 10⁻⁶ K⁻¹ und 12 x 10⁻⁶ K⁻¹ liegt.

Das erfindungsgemäße Verfahren weist die bereits im Zusammenhang mit der erfindungsgemäßen Hochtemperatur-Brennstoffzelle erläuterten Vorteile auf.

Weitere vorteilhafte Ausgestaltungen wurden ebenfalls bereits im Zusammenhang mit der erfindungsgemäßen Hochtemperatur-Brennstoffzelle erläutert.

Die Diffusionsbarriere wird auf den Träger und/oder die Anode aufgebracht. Dadurch lässt sich eine planare Struktur beibehalten.

Insbesondere wird die Diffusionsbarriere mit einer porösen Struktur hergestellt, um die Brennstoffzuführung zu der Anode zu gewährleisten.

Beispielsweise wird die Diffusionsbarriere aufgespritzt. Es ist auch möglich, diese beispielsweise durch Abscheidung wie Sputtern oder wie CVD-Verfahren oder wie PVD-Verfahren aufzubringen. Auch andere Aufbringverfahren wie Laserauftragverfahren sind möglich.

Bei einer Ausführungsform wird die Diffusionsbarriere durch Plasmaspritzen aufgebracht. Durch Einstellung der entsprechenden Parameter lässt sich eine gezielte Porenstruktur erreichen.

Es kann vorgesehen sein, dass die Anode auf der hergestellten Diffusionsbarriere hergestellt wird. Insbesondere wird sie aufgespritzt.

Die nachfolgende Beschreibung bevorzugter Ausführungsformen dient im Zusammenhang mit der Zeichnung der näheren Erläuterung der Erfindung. Es zeigen:
- Figur 1: eine schematische Teilschnittdarstellung eines Ausführungsbeispiels einer erfindungsgemäßen Hochtemperatur-Brennstoffzelle;
- Figur 2: eine schematische Darstellung der möglichen Interdiffusionsprozesse zwischen Träger und Anode;
- Figur 3: eine Ausschnitts-Schliffbilddarstellung eines Ausführungsbeispiels einer erfindungsgemäßen Hochtemperatur-Brennstoffzelle mit einer Diffusionsbarriere aus La_{0.7}Sr_{0.15}Ca_{0.15}CrO₃ (erkennbar sind Träger, Diffusionsbarriere und Anode); und
- Figur 4: eine schematische Darstellung des Quellverhaltens (C) und der Leitfähigkeit (er) in Abhängigkeit von dem Sauerstoffpartialdruck.

Hochtemperatur-Brennstoffzellen werden in einem Temperaturbereich von typischerweise 800°C bis 1000°C eingesetzt. Sie weisen einen Festkörperelektrolyten auf und werden auch als SOFC (Solid Oxide Fuel Cell) bezeichnet. Hochtemperatur-Brennstoffzellen haben einen hohen Wirkungsgrad. Die bei den hohen Einsatztemperaturen anfallende Abwärme kann ebenfalls genutzt werden.

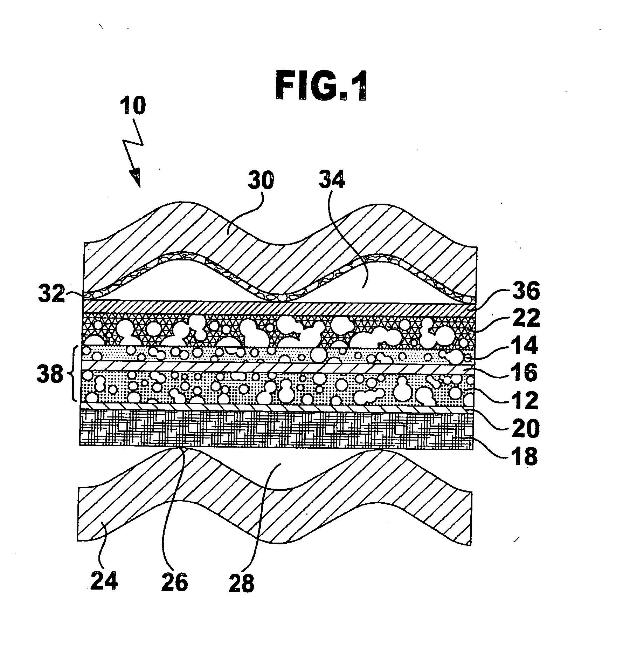

Ein Ausführungsbeispiel einer erfindungsgemäßen Hochtemperatur-Brennstoffzelle, welches in Figur 1 gezeigt und dort mit 10 bezeichnet ist, umfasst eine Anode 12, eine Kathode 14 und eine Elektrolyteinrichtung 16, welche zwischen der Anode 12 und der Kathode 14 angeordnet ist. Die Anode 12, die Kathode 14 und die Elektrolyteinrichtung 16 bilden eine elektrochemische Funktionseinheit 38.

Die Elektrolyteinrichtung 16 ist aus einem Festkörperelektrolyten hergestellt. Sie ist gasdicht, so dass die Anode 12 und die Kathode 14 bezüglich der jeweiligen gasförmigen Reaktanden (Brennstoff und Oxidator) voneinander getrennt sind.

Die Elektrolyteinrichtung 16 ist insbesondere mittels eines oxidkeramischen Elektrolytmaterials gebildet, welches Sauerstoffionen leitet. Beispielsweise ist ein ZrO₂-Elektrolyt vorgesehen.

Die Anode 12 ist auf einem Träger 18 angeordnet. Insbesondere ist die Anode 12 als Anodenschicht auf dem Träger 18 aufgebracht. Die Anode 12 weist eine poröse Struktur auf. Beispielsweise handelt es sich um eine ZrO₂/Ni-Anode.

Die Anode 12 ist insbesondere auf dem Träger 18 beispielsweise mittels eines Plasmaspritzverfahrens aufgespritzt.

Die Kathode 14 bildet eine Elektrodenschicht, welche insbesondere eine poröse Struktur aufweist. Beispielsweise ist eine poröse (La,Sr)MnO₃-Kathode vorgesehen.

Der Träger 18 ist aus einem metallischen Material hergestellt, welches insbesondere Fe umfasst. Beispielsweise ist der Träger 18 aus einer ferritischen Legierung hergestellt, welche auch Cr enthält.

Zwischen dem Träger 18 und der Anode 12 ist eine Diffusionsbarriere 20 angeordnet, welche eine Sperrwirkung für die Interdiffusion von Metallspezies zwischen dem Träger 18 und der Anode 12 aufweist. Diese Diffusionsbarriere 20 wird untenstehend noch näher erläutert.

Die elektrochemische Funktionseinheit 38 der Hochtemperatur-Brennstoffzelle 10, nämlich die Anode 12, die Elektrolyteinrichtung 16 und die Kathode 14, weist einen dreilagigen Aufbau auf. Insbesondere ist der Aufbau dreischichtig. Die Anode 12, die Kathode 14 und die Elektrolyteinrichtung 16 sind vorzugsweise als Dünnschichten ausgebildet. Es ist insbesondere vorgesehen, dass die Elektrolyteinrichtung 16 eine Dicke im Bereich zwischen 30 µm bis 50 µm aufweist.

An der Kathode 14 kann eine Stromkollektoreinrichtung 22 angeordnet sein, welche aus einem elektrisch leitfähigen, porösen Material hergestellt ist. Die Stromkollektoreinrichtung 22 ist beispielsweise als Schicht ausgebildet, welche auf der Kathode 14 angeordnet ist. Insbesondere ist diese Schicht auf die Kathode 14 aufgespritzt.

Der Träger 18 ist an einer ersten Bipolarplatte 24 gehalten, wobei der Träger 18 und die erste Bipolarplatte 24 in mechanischem und elektrischem Kontakt stehen. Die erste Bipolarplatte 24 ist mit dem Träger 18 insbesondere über Lötstellen 26 verbunden. Die erste Bipolarplatte 24 weist dem Träger 18 zugewandt Kanäle 28 auf. Über diese Kanäle 28 lässt sich Brennstoff dem Träger 18 und damit der Anode 12 zuführen. Ferner lässt sich nicht umgesetzter Brennstoff und Wasser als Reaktionsprodukt über diese Kanäle 28 abführen.

Die Hochtemperatur-Brennstoffzelle 10 umfasst ferner eine zweite Bipolarplatte 30, wobei die erste Bipolarplatte 24 und die zweite Bipolarplatte 30 elektrisch gegeneinander isoliert sind. Die zweite Bipolarplatte 30 ist mit einer dichten Schutzschicht 32 der Kathode 14 zugewandt versehen. Die Schutzschicht 32 dient zur Verhinderung der Abdampfung von Chrom aus der zweiten Bipolarplatte 30 (zur Verhinderung einer Kathodenvergiftung). Sie weist Kanäle 34 auf, über die Oxidator zuführbar und nicht verbrauchter Oxidator abführbar ist.

An der Kathode 14 ist eine poröse Kontaktschicht 36 angeordnet, welche mit der zweiten Bipolarplatte 30 verbunden ist.

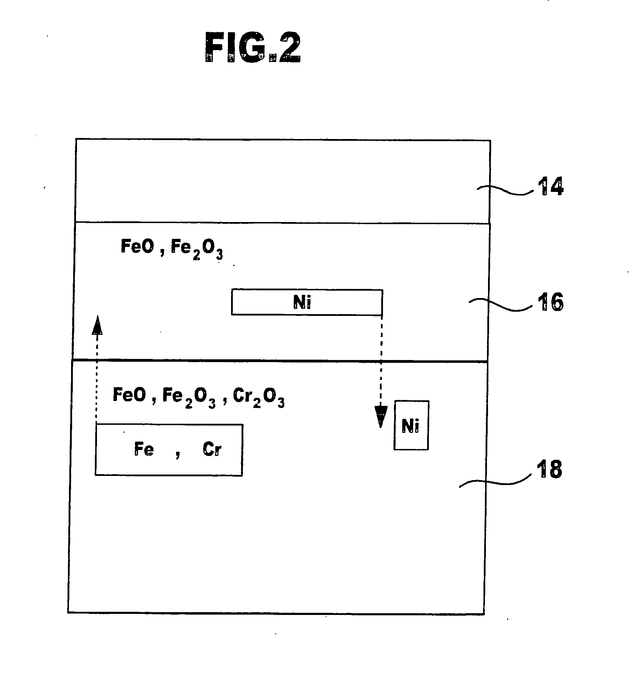

Wie anhand Figur 2 erläutert, können zwischen der Anode 12 und dem Träger 18 Interdiffusionsprozesse (in beiden Richtungen) stattfinden, sofern keine Diffusionsbarriere 20 vorgesehen ist. Insbesondere können metallische Spezies von dem Träger 18 zu der Anode 12 diffundieren und es können metallische Spezies von der Anode 12 zu dem Träger 18 diffundieren. Dadurch kann es zu Gefügeumwandlungen kommen, die thermische Spannungen induzieren und Rissbildungen zur Folge haben. Dies kann zur schneller Degradation der elektrochemischen Funktionseinheit bis zu vollständigem Zellversagen führen.

Wenn beispielsweise die Anode 12 Ni umfasst, dann steht das Nickel während des Zellbetriebs in direktem Kontakt mit der Fe-Matrix des porösen metallischen Trägers 18. Dadurch kann eine Diffusion von Ni-Spezies aus der Anode 12 in den Träger 18 erfolgen. Weiterhin können Fe-Spezies und Cr-Spezies von dem Träger 18 in die Anode 12 eindiffundieren. Das in die Substratmatrix des Trägers 18 eindiffundierende Ni kann zu einer Austenitisierung des ferritischen Trägergefüges führen. Dadurch wird der thermische Ausdehnungskoeffizient signifikant erhöht. Aufgrund dieser Gefügeumwandlung kann es während des Zellbetriebs zu Rissbildungen in dem Schichtverbund der Anode 12 und des Trägers 18 kommen.

Die Diffusion der Fe-Spezies und Cr-Spezies aus dem Träger 18 durch die Anode 12 bis zur Grenzschicht zwischen der Anode 12 und der Elektrolyteinrichtung 16 führt zur Oxidbildung mit den durch die Elektrolyteinrichtung 16 kommenden O⁻²-Ionen aus der kathodenseitigen Zellreaktion. Es entstehen dadurch Eisenoxide FeO und Fe₂O₃ sowie Chromoxide Cr₂O₃. Ein solcher Oxidationsvorgang ist in der Regel mit einer starken Volumenvergrößerung verbunden, die zur Rissbildung der Anode und der Elektrolyteinrichtung 16 und damit zur Zerstörung der Hochtemperatur-Brennstoffzelle 10 führen kann.

Die Diffusionsbarriere 20 ist aus einem Material hergestellt, welches eine Sperrwirkung für die Interdiffusionsprozesse metallischer Spezies aufweist. Die Diffusionsbarriere 20 weist eine solche poröse Struktur auf, dass Brennstoff zu der Anode 12 gelangen kann. Bei dem Brennstoff handelt es sich insbesondere um ein Brenngas wie beispielsweise Wasserstoff, Methan oder Erdgas.

Ferner ist die Diffusionsbarriere 20 aus einem Material hergestellt, welches aufgrund elektronischer Leitung elektrisch leitfähig ist. Die Ionenleitfähigkeit sollte möglichst gering sein. Die (elektronische) Leitfähigkeit liegt in reduzierender Anodengasatmosphäre bei einem Sauerstoff-Partialdruck von 10⁻¹⁶ bar zwischen 0,1 S/cm und 10 S/cm. Insbesondere liegt sie zwischen 1 S/cm und 3 S/cm.

Das Material der Diffusionsbarriere 20 weist einen thermischen Ausdehnungskoeffizienten auf, welcher an den Träger 18 und die Anode 12 angepasst ist. Insbesondere liegt der thermische Ausdehnungskoeffizient zwischen 9 x 10⁻⁶K⁻¹ und 12 x 10⁻⁶K⁻¹. Vorzugsweise liegt er zwischen 10 x 10⁻⁶K⁻¹ und 11 x 10⁻⁶K⁻¹.

Das Material der Diffusionsbarriere 20 ist ferner in der reduzierenden feuchten Anodengasatmosphäre chemisch beständig. Es ist im Zellbetrieb der Hochtemperatur-Brennstoffzelle 10 elektrochemisch kompatibel, das heißt es zeigt ein chemisch inertes Verhalten und zersetzt sich nicht im Brennstoffzellenbetrieb.

Vorzugsweise ist die Dicke der Diffusionsbarriere 20 kleiner als 100 µm.

Die Diffusionsbarriere 20 ist auf dem Träger 18 angeordnet. Insbesondere ist sie auf dem Träger 18 beispielsweise mittels eines Plasmaspritzverfahrens aufgespritzt. Auf dieser Diffusionsbarriere 20 wird dann die Anode 12 beispielsweise durch Aufspritzen hergestellt.

Es ist auch möglich, dass die Diffusionsbarriere 20 auf der Anode 12 hergestellt wird.

Die Diffusionsbarriere 20 ist insbesondere aus einem oxidkeramischen Material hergestellt, welches eine Sperrwirkung für die Diffusion von metallischen Spezies (insbesondere Fe-Spezies, Cr-Spezies, Ni-Spezies) aufweist. Ein mögliches Material ist Cr₂O₃.

Weitere mögliche Materialien sind Perovskit-Materialien mit der Struktur ABO₃ oder Materialien mit Spinell-Struktur AB₂O₄. Die physikalischen und chemischen Eigenschaften der genannten Oxide lassen sich durch Dotierung in einem weiten Bereich modifizieren. Durch gezielte Dotierung lässt sich dadurch eine Anpassung an die anodenseitigen Bedingungen der Hochtemperatur-Brennstoffzelle 10 erreichen.

Eine A-seitige Dotierung ist beispielsweise mit Sr, Ca oder Ba möglich. Eine B-seitige Dotierung ist beispielsweise mit Mg, Al, Mn, Fe, Co, Ni, Cu, Zn möglich.

Beispielsweise ist die Diffusionsbarriere aus Lanthanchromit und insbesondere dotiertem Lanthanchromit hergestellt.

Folgende Materialien wurden untersucht:

| Nr. | Dotierung | Thermischer (technischer) Ausdehnungskoeffizient (30°C-950°C) | Dotierung |
|---|---|---|---|
| 1 | La_{0.75}Sr_{0.2}Cr_{0.98}Co_{0.02}O₃ | 10,68 x 10⁻⁶ 1/K | gemischt (A-seitig und B-seitig) |
| 2 | La_{0.85}Sr_{0.1}Cr_{0.98}Co_{0.02}O₃ | 10,25 x 10⁻⁶ 1/K | " |
| 3 | La_{0.83}Sr_{0.17}Cr_{0.81}Al_{0.19}O₃ | 10,77 x 10⁻⁶ 1/K | " |
| 4 | La_{0.8}Sr_{0.17}Cr_{0.79}Al_{0.19}Co_{0.02}O₃ | 10,99 x 10⁻⁶ 1/K | " |
| 5 | La_{0.83}Ca_{0.17}Cr_{0.81}Al_{0.19}O₃ | 10,38 x 10⁻⁶ 1/K | " |
| 6 | LaCrO₃ | 9,03 x 10⁻⁶ 1/K | - |
| 7 | La_{0.9}Sr_{0.1}CrO₃ | 9,64 x 10⁻⁶ 1/K | A-seitig Sr |
| 8 | La_{0.8}Sr_{0.2}CrO₃ | 10,58 x 10⁻⁶ 1/K | " |
| 9 | La_{0.7}Sr_{0.3}CrO₃ | 10,80 x 10⁻⁶ 1/K | " |
| 10 | La_{0.6}Sr_{0.4}CrO₃ | 11,69 x 10⁻⁶ 1/K | " |
| 11 | La_{0.9}Ca_{0.1}CrO₃ | 9,38 x 10⁻⁶ 1/K | A-seitig Ca |
| 12 | La_{0.8}Ca_{0.2}CrO₃ | 9,87 x 10⁻⁶ 1/K | " |
| 13 | La_{0.7}Ca_{0.3}CrO₃ | 10,35 x 10⁻⁶ 1/K | " |
| 14 | La_{0.6}Ca_{0.4}CrO₃ | 10,75 x 10⁻⁶ 1/K | " |
| 15 | La_{0.9}Ca_{0.05}Sr_{0.05}CrO₃ | 9,52 × 10⁻⁶ 1/K | A-seitig Ca/Sr |
| 16 | La_{0.8}Ca_{0.1}Sr_{0.1}CrO₃ | 10,12 x 10⁻⁶ 1/K | " |
| 17 | La_{0.7}Ca_{0.15}Sr_{0.15}CrO₃ | 10,56 x 10⁻⁶ 1/K | " |
| 18 | La_{0.6}Ca_{0.2}Sr_{0.2}CrO₃ | 11,53 x 10⁻⁶ 1/K | " |

Am geeignetsten sind die Materialien, bei welchen der thermische Ausdehnungskoeffizient zwischen 10 x 10⁻⁶K⁻¹ und 11 x 10⁻⁶K⁻¹ liegt, das heißt die Materialien 1 bis 5, 8, 9, 13, 14 und 16, 17.

Von den gezeigten Materialien weist das Material 18 die höchste elektrische Leitfähigkeit auf, gefolgt von 9, 17, 8, 13, 7, 12, 6.

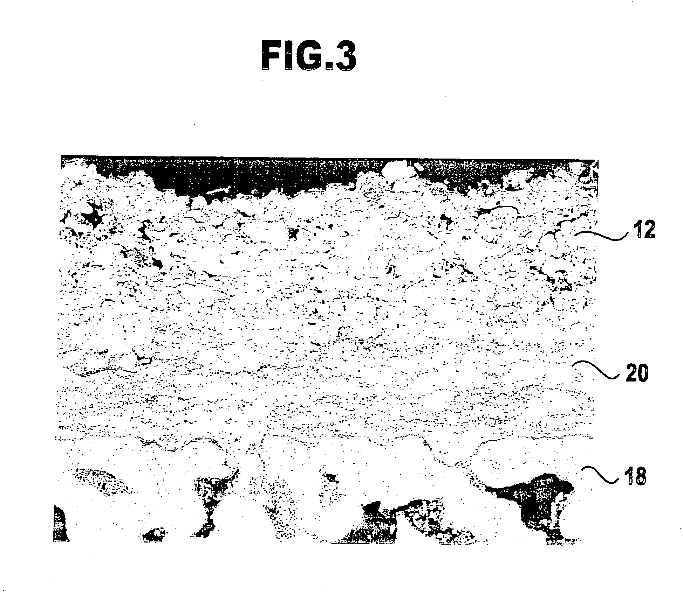

In Figur 3 ist ein Schliffbild gezeigt, in dem die Anode 12, die Diffusionsbarriere 20 und der Träger 18 erkennbar sind. Die Diffusionsbarriere 20 ist aus La_{0.7}Sr_{0.15}Ca_{0.15}CrO₃ (Material 17 gemäß Tabelle) hergestellt. Der Querschliff wurde nach einer 200-stündigen Leitfähigkeitsmessung in Ar-5 %-H₂-Atmosphäre bei 800°C durchgeführt. Man erkennt am Schliffbild keine nennenswerte Rissbildung. Auch detailliertere REM-Untersuchungen und EDX-Elementverteilungsuntersuchungen haben gezeigt, dass durch die Diffusionsbarriere 20 unter Verhinderung der Rissbildung eine effektive Diffusionssperrwirkung für metallische Spezies erreicht wird.

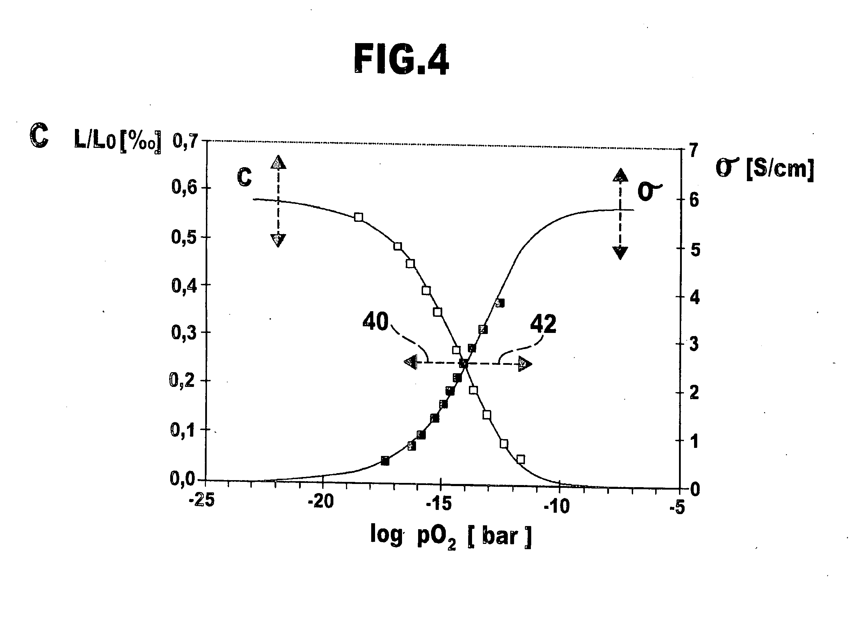

Durch die Dotierung des Perovskitmaterials oder Spinellmaterials und insbesondere durch die Dotierung von LaCrO₃ kann die elektrische Leitfähigkeit erhöht werden. Ferner kann der thermische Ausdehnungskoeffizient signifikant erhöht werden. Es ist bekannt, dass mit der Dotierung die chemische Beständigkeit abnimmt. Der Quellkoeffizient C, welcher den Ausbau von Sauerstoff aus der Struktur und die damit einhergehende Volumenvergrößerung des Perovskitmaterials in reduzierender Anodengasatmosphäre beschreibt, nimmt mit der Dotierung zu. Dies ist in Figur 4 schematisch gezeigt: Dort ist schematisch für LaCrO₃ die Quellung mit dem Quellkoeffizienten C in Abhängigkeit von dem Sauerstoffpartialdruck gezeigt. Ferner gezeigt ist die elektrische Leitfähigkeit in Abhängigkeit von dem Sauerstoffpartialdruck.

Bei abnehmender Dotierung nimmt das Quellverhalten ab, wobei dabei auch die elektrische Leitfähigkeit abnimmt. Umgekehrt nimmt bei zunehmender Dotierung die elektrische Leitfähigkeit zu, während auch die Quellung zunimmt. Durch gezielte Dotierung können die elektrische Leitfähigkeit und das Quellverhalten gezielt beeinflusst werden, um einen optimierten Kompromiss zu erreichen. Diese Beeinflussung ist in Figur 4 durch die Pfeile 40, 42 als Verschiebung der Kurven angedeutet.

Es muss also ein Kompromiss gefunden werden zwischen der thermischen Ausdehnung, einer hohen elektrischen Leitfähigkeit und einer ausreichend hohen chemischen Beständigkeit, ausgedrückt über das Quellverhalten.

Ein Beispiel eines geeigneten Materials ist das Material 17 gemäß obiger Tabelle.

Die Hochtemperatur-Brennstoffzelle 10 wird wie folgt hergestellt:

Es wird der Träger 18 aus einem metallischen Material und insbesondere porösen metallischen Material hergestellt. Auf diesen Träger 18 wird die Diffusionsbarriere 20 aufgebracht. Beispielsweise wird sie durch ein Plasmaspritzverfahren aufgebracht. Auf die Diffusionsbarriere 20 wird die Anode 12 beispielsweise durch ein Plasmaspritzverfahren aufgebracht. Darauf wiederum wird die Elektrolyteinrichtung 16 aufgebracht. Auf die Elektrolyteinrichtung 16 wiederum wird die Kathode 14 aufgebracht.

Durch die erfindungsgemäße Lösung wird eine hohe Langzeitstabilität für die Hochtemperatur-Brennstoffzelle 10 erreicht. Es lässt sich eine mechanisch stabile elektrochemische Funktionseinheit 38 bereitstellen, welche auf dem Träger 18 aufgebaut ist. Der Träger 18 ist vorzugsweise auf der Basis von ferritischen Stählen hergestellt. Die an der Grenzschicht zwischen Träger 18 und Anode 12 sonst stattfindenden Diffusionsprozesse werden durch die Diffusionsbarriere 20 wirkungsvoll gesperrt.

## Patentansprüche

1. Hochtemperatur-Brennstoffzelle, umfassend eine Anode (12) und einen Träger (18), an welchem die Anode (12) angeordnet ist und welcher für Brennstoff durchlässig ist, wobei der Träger (18) aus einem metallischen Material hergestellt ist, und eine zwischen der Anode (12) und dem Träger (18) angeordnete Diffusionsbarriere (20) zur Vermeidung von Interdiffusionsprozessen zwischen dem Träger (18) und der Anode (12), wobei die Diffusionsbarriere (20) für Brennstoff durchlässig ist und die Diffusionsbarriere (20) eine Sperrwirkung für die Diffusion von Metallspezies zwischen Anode (12) und Träger (18) aufweist, und wobei die Diffusionsbarriere (20) durch mindestens eine Materialschicht gebildet ist, welche auf dem Träger (18) angeordnet ist,
**dadurch gekennzeichnet , dass** die Diffusionsbarriere (20) eine oder mehrere Materialien mit Perovskit-Struktur ABO₃ und/oder Spinell-Struktur AB₂O₄ umfasst und dass der thermische Ausdehnungskoeffizient des Materials der Diffusionsbarriere (20) im Bereich zwischen 9 x 10⁻⁶ K⁻¹ und 12 x 10⁻⁶ K⁻¹ liegt.

2. Hochtemperatur-Brennstoffzelle nach Anspruch 1, **dadurch gekennzeichnet, dass** die mindestens eine Materialschicht auf den Träger (18) und/oder die Anode (12) aufgespritzt ist.

3. Hochtemperatur-Brennstoffzelle nach Anspruch 1 oder 2, **dadurch gekennzeichnet, dass** die mindestens eine Materialschicht mittels eines Plasmaspritzverfahrens aufgebracht ist.

4. Hochtemperatur-Brennstoffzelle nach einem der vorangehenden Ansprüche, **dadurch gekennzeichnet, dass** die Diffusionsbarriere (20) eine poröse Struktur aufweist.

5. Hochtemperatur-Brennstoffzelle nach einem der vorangehenden Ansprüche, **dadurch gekennzeichnet, dass** das Material der Diffusionsbarriere (20) einen an das Anodenmaterial und/oder Trägermaterial angepassten thermischen Ausdehnungskoeffizienten hat.

6. Hochtemperatur-Brennstoffzelle nach einem der vorangehenden Ansprüche, **dadurch gekennzeichnet, dass** das Material der Diffusionsbarriere (20) elektrisch leitfähig aufgrund elektronischer Leitung ist.

7. Hochtemperatur-Brennstoffzelle nach Anspruch 6, **dadurch gekennzeichnet, dass** die Leitfähigkeit in Anodengasatmosphäre zwischen 0,1 S/cm und 10 S/cm liegt.

8. Hochtemperatur-Brennstoffzelle nach einem der vorangehenden Ansprüche, **dadurch gekennzeichnet, dass** die Diffusionsbarriere (20) aus einem Material hergestellt ist, welches in feuchter Anodengasatmosphäre chemisch beständig ist.

9. Hochtemperatur-Brennstoffzelle nach einem der vorangehenden Ansprüche, **dadurch gekennzeichnet, dass** die Diffusionsbarriere (20) aus einem Material hergestellt ist, welches im Zellbetrieb der Brennstoffzelle ein chemisch inertes Verhalten hat.

10. Hochtemperatur-Brennstoffzelle nach einem der vorangehenden Ansprüche, **dadurch gekennzeichnet, dass** die Diffusionsbarriere (20) eine Sperrwirkung für die Diffusion von Fe-Spezies und/oder Cr-Spezies und/oder Mn-Spezies und/oder Ni-Spezies zwischen Anode (12) und Träger (18) aufweist.

11. Hochtemperatur-Brennstoffzelle nach einem der vorangehenden Ansprüche, **dadurch gekennzeichnet, dass** der Träger (18) aus einem Fe umfassenden metallischen Material hergestellt ist.

12. Hochtemperatur-Brennstoffzelle nach Anspruch 11, **dadurch gekennzeichnet, dass** der Träger (18) aus einem Cr und/oder Mn umfassenden metallischen Material hergestellt ist.

13. Hochtemperatur-Brennstoffzelle nach einem der vorangehenden Ansprüche, **dadurch gekennzeichnet, dass** die Anode (12) aus einem Ni umfassenden Material hergestellt ist.

14. Hochtemperatur-Brennstoffzelle nach einem der vorangehenden Ansprüche, **dadurch gekennzeichnet, dass** der Träger (18) eine poröse Struktur aufweist.

15. Hochtemperatur-Brennstoffzelle nach einem der vorangehenden Ansprüche, **gekennzeichnet durch** eine Kathode (14) und eine Elektrolyteinrichtung (16), welche zwischen der Kathode (14) und der Anode (12) angeordnet ist.

16. Hochtemperatur-Brennstoffzelle nach Anspruch 15, **dadurch gekennzeichnet, dass** die Elektrolyteinrichtung (16) gasdicht ist.

17. Hochtemperatur-Brennstoffzelle nach Anspruch 15 oder 16, **dadurch gekennzeichnet, dass** die Elektrolyteinrichtung (16) leitend für Sauerstoffionen ist.

18. Hochtemperatur-Brennstoffzelle nach einem der vorangehenden Ansprüche, **dadurch gekennzeichnet, dass** die Diffusionsbarriere (20) eine Dicke kleiner als 100 µm aufweist.

19. Hochtemperatur-Brennstoffzelle nach einem der vorangehenden Ansprüche, **dadurch gekennzeichnet, dass** die Diffusionsbarriere (20) aus einem oxidkeramischen Material hergestellt ist.

20. Hochtemperatur-Brennstoffzelle nach einem der vorangehenden Ansprüche, **dadurch gekennzeichnet, dass** die Diffusionsbarriere (20) Cr₂O₃ umfasst.

21. Hochtemperatur-Brennstoffzelle nach einem der vorangehenden Ansprüche, **dadurch gekennzeichnet, dass** das Material A-seitig und/oder B-seitig dotiert ist.

22. Hochtemperatur-Brennstoffzelle nach Anspruch 21, **dadurch gekennzeichnet, dass** eine A-seitige Dotierung mit Sr und/oder Cr und/oder Ba vorgesehen ist.

23. Hochtemperatur-Brennstoffzelle nach Anspruch 21 oder 22, **dadurch gekennzeichnet, dass** eine B-seitige Dotierung mit Mg und/oder Al und/oder Mn und/oder Fe und/oder Co und/oder Ni und/oder Cu und/oder Cr und/oder Zn vorgesehen ist.

24. Hochtemperatur-Brennstoffzelle nach einem der vorangehenden Ansprüche, **dadurch gekennzeichnet, dass** die Diffusionsbarriere (20) ein oder mehrere Lanthan-Perovskite umfasst.

25. Hochtemperatur-Brennstoffzelle nach einem der Ansprüche 21 bis 24, **dadurch gekennzeichnet, dass** die Dotierung so gewählt ist, dass sich bei ausreichender elektrischer Leitfähigkeit ein akzeptables Quellverhalten ergibt.

26. Verfahren zur Herstellung einer Hochtemperatur-Brennstoffzelle, bei dem eine Anode auf einem metallischen Träger angeordnet wird und eine Diffusionsbarriere hergestellt wird, welche zwischen Anode und Träger angeordnet ist, wobei die Diffusionsbarriere auf den Träger und/oder die Anode aufgebracht wird, und wobei die Diffusionsbarriere eine Sperrwirkung für die Diffusion von Metallspezies zwischen Anode und Träger aufweist,
**dadurch gekennzeichnet** , dassdieDiffusionsbarriere eine oder mehrere Materialien mit Perovskit-Struktur ABO₃ und/oder Spinell-Struktur AB₂O₄ umfasst und dass der thermische Ausdehnungskoeffizient des Materials der Diffusionsbarriere (20) im Bereich zwischen 9 x 10⁻⁶ K⁻¹ und 12 x 10⁻⁶ K⁻¹ liegt.

27. Verfahren nach Anspruch 26, **dadurch gekennzeichnet, dass** die Diffusionsbarriere mit einer porösen Struktur hergestellt wird.

28. Verfahren nach Anspruch 26 oder 27, **dadurch gekennzeichnet, dass** die Diffusionsbarriere aufgespritzt wird.

29. Verfahren nach einem der Ansprüche 26 bis 28, **dadurch gekennzeichnet, dass** die Diffusionsbarriere durch Plasmaspritzen aufgebracht wird.

30. Verfahren nach einem der Ansprüche 26 bis 29, **dadurch gekennzeichnet, dass** die Anode auf der Diffusionsbarriere hergestellt wird.

## Claims

1. High-temperature fuel cell, comprising an anode (12) and a carrier (18) on which the anode (12) is arranged and which is permeable to fuel, wherein the carrier (18) is made of a metallic material, and a diffusion barrier (20) arranged between the anode (12) and the carrier (18) for preventing interdiffusion processes between the carrier (18) and the anode (12), wherein the diffusion barrier (20) is permeable to fuel and the diffusion barrier (20) has a barrier effect for the diffusion of metal species between the anode (12) and the carrier (18), and wherein the diffusion barrier (20) is formed by at least one material layer which is arranged on the carrier (18),
**characterized in that** the diffusion barrier (20) comprises one or more materials with ABO₃ perovskite structure and/or AB₂O₄ spinel structure and **in that** the coefficient of thermal expansion of the material of the diffusion barrier (20) is in the range between 9 x 10⁻⁶ K⁻¹ and 12 x 10⁻⁶ K⁻¹.

2. High-temperature fuel cell in accordance with claim 1, **characterized in that** the at least one material layer is applied to the carrier (18) and/or the anode (12) by spraying.

3. High-temperature fuel cell in accordance with claim 1 or 2, **characterized in that** the at least one material layer is applied by a plasma spray process.

4. High-temperature fuel cell in accordance with any one of the preceding claims, **characterized in that** the diffusion barrier (20) has a porous structure.

5. High-temperature fuel cell in accordance with any one of the preceding claims, **characterized in that** the material of the diffusion barrier (20) has a coefficient of thermal expansion that is adapted to the anode material and/or the carrier material.

6. High-temperature fuel cell in accordance with any one of the preceding claims, **characterized in that** the material of the diffusion barrier (20) is electrically conductive due to electronic conduction.

7. High-temperature fuel cell in accordance with claim 6, **characterized in that** the conductivity in anode gas atmosphere is between 0.1 S/cm and 10 S/cm.

8. High-temperature fuel cell in accordance with any one of the preceding claims, **characterized in that** the diffusion barrier (20) is made of a material which has chemical resistance in wet anode gas atmosphere.

9. High-temperature fuel cell in accordance with any one of the preceding claims, **characterized in that** the diffusion barrier (20) is made of a material which has chemically inert behaviour in cell operation of the fuel cell.

10. High-temperature fuel cell in accordance with any one of the preceding claims, **characterized in that** the diffusion barrier (20) has a barrier effect for the diffusion of Fe species and/or Cr species and/or Mn species and/or Ni species between the anode (12) and the carrier (18).

11. High-temperature fuel cell in accordance with any one of the preceding claims, **characterized in that** the carrier (18) is made of a metallic material comprising Fe.

12. High-temperature fuel cell in accordance with claim 11, **characterized in that** the carrier (18) is made of a metallic material comprising Cr and/or Mn.

13. High-temperature fuel cell in accordance with any one of the preceding claims, **characterized in that** the anode (12) is made of a material comprising Ni.

14. High-temperature fuel cell in accordance with any one of the preceding claims, **characterized in that** the carrier (18) has a porous structure.

15. High-temperature fuel cell in accordance with any one of the preceding claims, **characterized by** a cathode (14) and by an electrolyte device (16) arranged between the cathode (14) and the anode (12).

16. High-temperature fuel cell in accordance with claim 15, **characterized in that** the electrolyte device (16) is gastight.

17. High-temperature fuel cell in accordance with claim 15 or 16, **characterized in that** the electrolyte device (16) is conductive for oxygen ions.

18. High-temperature fuel cell in accordance with any one of the preceding claims, **characterized in that** the diffusion barrier (20) has a thickness of less than 100 µm.

19. High-temperature fuel cell in accordance with any one of the preceding claims, **characterized in that** the diffusion barrier (20) is made of an oxide ceramic material.

20. High-temperature fuel cell in accordance with any one of the preceding claims, **characterized in that** the diffusion barrier (20) comprises Cr₂O₃.

21. High-temperature fuel cell in accordance with any one of the preceding claims, **characterized in that** the material has an A-side doping and/or a B-side doping.

22. High-temperature fuel cell in accordance with claim 21, **characterized in that** an A-side doping with Sr and/or Cr and/or Ba is provided.

23. High-temperature fuel cell in accordance with claim 21 or 22, **characterized in that** a B-side doping with Mg and/or Al and/or Mn and/or Fe and/or Co and/or Ni and/or Cu and/or Cr and/or Zn is provided.

24. High-temperature fuel cell in accordance with any one of the preceding claims, **characterized in that** the diffusion barrier (20) comprises one or more lanthanum perovskites.

25. High-temperature fuel cell in accordance with claim 21 to 24, **characterized in that** the doping is selected such that it results in acceptable swelling behaviour with sufficient electric conductivity.

26. Method for producing a high-temperature fuel cell in which an anode is arranged on a metallic carrier and in which a diffusion barrier is produced which is arranged between the anode and the carrier, wherein the diffusion barrier is applied to the carrier and/or anode, and wherein the diffusion barrier has a barrier effect for the diffusion of metal species between the anode and the carrier,
**characterized in that** the diffusion barrier comprises one or more materials with ABO₃ perovskite structure and/or AB₂O₄ spinel structure and **in that** the coefficient of thermal expansion of the material of the diffusion barrier (20) is in the range between 9 x 10⁻⁶ K⁻¹ and 12 x 10⁻⁶ K⁻¹.

27. Method in accordance with claim 26, **characterized in that** the diffusion barrier is produced with a porous structure.

28. Method in accordance with claim 26 or 27, **characterized in that** the diffusion barrier is applied by spraying.

29. Method in accordance with claim 26 to 28, **characterized in that** the diffusion barrier is applied by plasma spraying.

30. Method in accordance with claim 26 to 29, **characterized in that** the anode is produced on the diffusion barrier.

## Revendications

1. Pile à combustible haute température, comprenant une anode (12) et un support (18), sur lequel est disposée l'anode (12) et qui est perméable au combustible, le support (18) étant fabriqué en un matériau métallique, et une barrière de diffusion (20) disposée entre l'anode (12) et le support (18) pour éviter des processus d'interdiffusion entre le support (18) et l'anode (12), dans laquelle la barrière de diffusion (20) est perméable au combustible, et la barrière de diffusion (20) présente une action de blocage pour la diffusion de l'espèce métallique entre l'anode (12) et le support (18) et dans laquelle la barrière de diffusion (20) est formée par au moins une couche de matériau qui est disposée sur le support (18),
**caractérisée en ce que** la barrière de diffusion (20) comprend un ou plusieurs matériaux ayant une structure de pérovskite ABO₃ et/ou une structure spinelle AB₂O₄ et **en ce que** le coefficient de dilatation thermique du matériau de la barrière de diffusion (20) réside dans la plage située entre 9 x 10⁻⁶ K⁻¹ et 12 x 10⁻⁶ K⁻¹.

2. Pile à combustible haute température selon la revendication 1, **caractérisée en ce que** l'au moins une couche de matériau est injectée sur le support (18) et/ou sur l'anode (12).

3. Pile à combustible haute température selon la revendication 1 ou 2, **caractérisée en ce que** l'au moins une couche de matériau est déposée au moyen d'un procédé de projection plasma.

4. Pile à combustible haute température selon l'une des revendications précédentes, **caractérisée en ce que** la barrière de diffusion (20) présente une structure poreuse.

5. Pile à combustible haute température selon l'une des revendications précédentes, **caractérisée en ce que** le matériau de la barrière de diffusion (20) a un coefficient de dilatation thermique adapté au matériau de l'anode et/ou au matériau du support.

6. Pile à combustible haute température selon l'une des revendications précédentes, **caractérisée en ce que** le matériau de la barrière de diffusion (20) est électriquement conducteur compte tenu de la conduction électronique.

7. Pile à combustible haute température selon la revendication 6, **caractérisée en ce que** la conductivité dans l'atmosphère de gaz anodique est située entre 0,1 S/cm et 10 S/cm.

8. Pile à combustible haute température selon l'une des revendications précédentes, **caractérisée en ce que** la barrière de diffusion (20) est fabriquée en un matériau qui est chimiquement résistant dans une atmosphère humide de gaz anodique.

9. Pile à combustible haute température selon l'une des revendications précédentes, **caractérisée en ce que** la barrière de diffusion (20) est fabriquée en un matériau qui a un comportement chimiquement inerte quand la pile à combustible fonctionne.

10. Pile à combustible haute température selon l'une des revendications précédentes, **caractérisée en ce que** la barrière de diffusion (20) présente une action de blocage pour la diffusion d'espèces Fe et/ou d'espèces Cr et/ou d'espèces Mn et/ou d'espèces Ni entre l'anode (12) et le support (18).

11. Pile à combustible haute température selon l'une des revendications précédentes, **caractérisée en ce que** le support (18) est fabriqué en un matériau métallique comprenant du Fe.

12. Pile à combustible haute température selon la revendication 11, **caractérisée en ce que** le support (18) est fabriqué en un matériau métallique comprenant du Cr et/ou du Mn.

13. Pile à combustible haute température selon l'une des revendications précédentes, **caractérisée en ce que** l'anode (12) est fabriquée en un matériau comprenant du Ni.

14. Pile à combustible haute température selon l'une des revendications précédentes, **caractérisée en ce que** le support (18) présente une structure poreuse.

15. Pile à combustible haute température selon l'une des revendications précédentes, **caractérisée par** une cathode (14) et un système électrolytique (16) qui est disposé entre la cathode (14) et l'anode (12).

16. Pile à combustible haute température selon la revendication 15, **caractérisée en ce que** le système électrolytique (16) est étanche au gaz.

17. Pile à combustible haute température selon la revendication 15 ou 16, **caractérisée en ce que** le système électrolytique (16) est conducteur pour les ions oxygène.

18. Pile à combustible haute température selon l'une des revendications précédentes, **caractérisée en ce que** la barrière de diffusion (20) a une épaisseur inférieure à 100 µm.

19. Pile à combustible haute température selon l'une des revendications précédentes, **caractérisée en ce que** la barrière de diffusion (20) est fabriquée en un matériau céramique d'oxyde.

20. Pile à combustible haute température selon l'une des revendications précédentes, **caractérisée en ce que** la barrière de diffusion (20) comprend du Cr₂O₃.

21. Pile à combustible haute température selon l'une des revendications précédentes, **caractérisée en ce que** le matériau est dopé face A et/ou face B.

22. Pile à combustible haute température selon la revendication 21, **caractérisée en ce qu'**un dopage est prévu face A avec Sr et/ou Cr et/ou Ba.

23. Pile à combustible haute température selon la revendication 21 ou 22, **caractérisée en ce qu'**un dopage est prévu face B avec Mg et/ou Al et/ou Mn et/ou Fe et/ou Co et/ou Ni et/ou Cu et/ou Cr et/ou Zn.

24. Pile à combustible haute température selon l'une des revendications précédentes, **caractérisée en ce que** la barrière de diffusion (20) comprend un ou plusieurs pérovskites de lanthane.

25. Pile à combustible haute température selon l'une des revendications 21 à 24, **caractérisée en ce que** le dopage est choisi de sorte que l'on obtienne un comportement de gonflement acceptable pour une conductivité électrique suffisante.

26. Procédé de fabrication d'une pile à combustible haute température, dans lequel une anode est disposée sur un support métallique et une barrière de diffusion disposée entre l'anode et le support est fabriquée, la barrière de diffusion étant déposée sur le support et/ou sur l'anode, et la barrière de diffusion présentant une action de blocage pour la diffusion de l'espèce métallique entre l'anode et le support,
**caractérisé en ce que** la barrière de diffusion comprend un ou plusieurs matériaux ayant une structure de pérovskite ABO₃ et/ou une structure spinelle AB₂O₄ et **en ce que** le coefficient de dilatation thermique du matériau de la barrière de diffusion (20) réside dans la plage située entre 9 x 10⁻⁶ K⁻¹ et 12 x 10⁻⁶ K⁻¹.

27. Procédé selon la revendication 26, **caractérisé en ce que** la barrière de diffusion est fabriquée avec une structure poreuse.

28. Procédé selon la revendication 26 ou 27, **caractérisé en ce que** la barrière de diffusion est injectée.

29. Procédé selon l'une des revendications 26 à 28, **caractérisé en ce que** la barrière de diffusion est déposée par projection plasma.

30. Procédé selon l'une des revendications 26 à 29, **caractérisé en ce que** l'anode est fabriquée sur la barrière de diffusion.
